# NEW EUROPEAN PATENT SPECIFICATION

(11) **EP 1 856 974 B2**
(45) Date of publication and mention of the opposition decision: **13.01.2016**
(45) Mention of the grant of the patent: 15.08.2012
(21) Application number: 07009659.9
(22) Date of filing: 15.05.2007
(51) Int. Cl.: A01N 25/34

(54) **Antimicrobial water filter medium**
Antimikrobieller Wasserfiltermedium
Matière filtrante antibactérienne pour filtrer l'eau

(30) Priority: 16.05.2006 US 434941
(43) Date of publication of application: 21.11.2007
(73) Proprietor: Johns Manville, Denver, CO 80202 (US)
(72) Inventor: Bennett, James Calvin, Toledo, Ohio 43615 (US); Edge, Barry Nelson, Cowpens, South Carolina 29330 (US); Granger, Charles Russell, Mooresville, North Carolina 28117 (US); Kern, Charles Francis, Marietta, Ohio 45750 (US)
(74) Representative: Mai, Dörr, Besier

(56) References cited:
- EP-A2- 0 980 700
- WO-A2-2007/016480
- JP-A- 5 214 671
- US-A- 6 165 243
- US-A1- 2004 214 495
- US-A1- 2004 214 495
- US-A1- 2007 016 481

## Description

### BACKGROUND OF THE INVENTION

### Field of the Invention

The present invention relates to an antimicrobial water filter medium. More specifically, the present invention relates to an antimicrobial pool/spa filter comprised of bi-component fibers, each containing an antimicrobial agent.

### Description of the Related Art

Swimming, soaking in a spa, whirlpool, hot tub or hydrotherapy pool, can promote an individual's health and relieve physical and psychological stresses. Swimming pools, hot tubs, spas, hydrotherapy pools and the like, referred to collectively as "pools", must be kept clean in terms of water quality. The elimination of dirt, debris, hair, oils, and microorganisms from the pool water is critical towards ensuring the health and safety of the individual bathing in the pool. This can be particularly true with indoor pools which are generally heated and are supposed to be used in all seasons. Sweat, hair and other foreign matter originating from the human body are potential sources of bacterial growth that can contaminate the pool water and deteriorate its quality.

To eliminate contaminants, pool water has traditionally been treated by continuous passage of a portion of the water from the pool over filters containing sand or over filters containing diatomaceous earth, after a first passage through a filter for the removal of materials such as, particulates, dirt, debris, insects, hair, oils, etc. The water is then returned to the pool with, optionally, the addition of a chemical product such as chlorine, chlorine dioxide, bromine, iodine, ozone or the like, in order to disinfect it.

Sand and diatomaceous earth are typically the filtration media of choice, but are not the only filtration media currently available. Substitutes for sand and/or diatomaceous earth include ceramic filters and activated carbon. For example, porous ceramic filters have a three-dimensional network of extremely fine filtering spaces that can trap organic matter, such as oils. However, these ceramic filters can become easily clogged with the build-up of oils, dirt and biofilm formed by microorganisms associated with the flora of a typical pool environment.

More importantly, the first filter often used for the filtration of pool water is often found as a filtration cartridge mounted in combination with a water suction and delivery polyester fabric arranged radially along the generating lines of a central cylinder. The base of the cartridge is placed in communication with the suction system in order to filter the water that enters from the outside of the cartridge and passes across its walls. Although the polyester fabric filter removes contaminants, it gets dirty quite quickly from the build up of oils, microorganisms and biofilm, and it is often difficult to clean due to its fragile construction. Consequently, cleansing of the filter can be problematic, not easily lending itself to decontamination and removal of microorganisms. Cleaning of the filter can lead to tearing of the polyester, degradation of the porosity of the material and/or further embedding the debris into the polyester fabric. General anti-microbial filters comprising bi-component fibers which can be applied for various applications, such as for water filtration, inter alia of swimming pools, are known from US 2004/0214495.

Therefore, a need exists which overcomes one or more of the above identified problems. It is an object of the present invention to provide a more effective and efficient filter medium which overcomes the foregoing problems and is suitably for use as a pool filter.

### SUMMARY OF THE INVENTION

The present invention circumvents one or more of the problems described above by providing a water filter medium claimed In claim 1. In this respect, every core-sheath fiber of the filter medium contains antimicrobial agent and can effectively fight bacterial growth.

The filter media of the invention can advantageously be used for filtration of public water supplies, home tap water, and, preferably, pools. In a preferred embodiment, the filter media of the invention are used in pools for the removal of oils, dirt, debris and microorganisms. The filter media can be configured in a filter cartridge or other configurations known in the art that are readily adapted to the final application. In one embodiment, layers of sheets of the filter media of the invention, stacked on one another, is used as a filter medium for the clarification/purification of water,

### DETAILED DESCRIPTION OF THE PREFERRED EMBODIMENTS

The fibers used in the filter medium of the present invention are spunbond polyester core-sheath fibers, produced with an antimicrobial additive in the sheath polymer as further defined in claim 1. The fibers are prepared by spinning together two polyester polymers to produce a bicomponent fiber. Each fiber is composed of an inner "core" polyester polymer with an outer "sheath" polyester polymer. In the present invention, an antimicrobial agent is added to the sheath polymer before extrusion.

The term "core-sheath" is art recognized and refers to fibers containing at least two different polyester polymers that are arranged to occupy distinct sections across the cross-section of each of the fibers along the entire or substantially entire length of the fiber. The core sheath fibers contain at least two polyester polymers having different melting points, and the lowest melting polyester polymer forms at least a portion of the peripheral surface of each of the filaments. The polymers are selected to have a melting point difference between the highest melting polymer and the lowest melting polyester polymer of at least about 5° C., preferably at least about 10° C., most preferably at least about 30° C., such that the lowest melting polyester polymer can be melted or rendered tacky without melting the higher melting polyester polymers of the filaments. This difference in melting points is advantageously used to bond the fibers to each other via the softened/melted sheath component(s). When a nonwoven web containing the polyester core-sheath fibers is heated to a temperature equal to or higher than the melting point of the lowest melting polyester polymer but below the melting point of the highest melting polyester polymer, the melted peripheral portions of the filaments form interfiber bonds, especially at the cross-over contact points, throughout the web while the high melting polyester polymer portions of the filaments maintain the physical and dimensional integrity of the web.

The polyester sheath portion of a fiber is bonded to one or more adjacent polyester core fibers, forming an interconnected three-dimensional array of core fibers interspersed and connected by the sheath material. The sheath material connects the core fibers together, such that the carded nonwoven filter media is porous. This bonding is generally accomplished by melting polyester the sheath material about the polyestercore fiber. At points of contact, the melted sheath material solidifies upon cooling, thereby forming the interconnected three-dimensional porous filter media.

The nonwoven web formed from the core-sheath fibers is bonded using any effective bonding means that heats the web to a temperature sufficiently high enough to melt the lowest melting polyester polymer but below the melting point of the higher melting structural polyester polymers of the web, thereby causing the filaments to form interfiber bonds, especially at cross-over contact points, throughout the web. For example, a through-air bonding, oven bonding, or infrared bonding process that effects interfiber bonds without applying significant compacting pressure can be used. Particularly useful is a through-air bonding process which effects interfiber bonds by thoroughly and evenly heating the web with a penetrating flow of forced, heated air.

The core-sheath fibers are produced from at least two polyester polymers having different melting points as defined in claim 1.

The term "spunbond fibers" as used herein indicates small diameter filaments that are formed by extruding one or more molten thermoplastic polyester polymers as fibers from a plurality of capillaries of a spinneret. The extruded fibers are cooled while being drawn by an eductive or other well-known drawing mechanism to form spunbond fibers, The drawn spunbond fibers are then deposited or laid onto a forming surface in a random manner to form a loosely entangled and uniform fiber web. The laid fiber web is then subjected to a bonding process, such as thermobonding or by needlepunching, to impart physical integrity and dimensional stability. Typically, spunbond fibers have an average diameter of at least about 10 microns. Exemplary processes for producing spunbond nonwoven webs are well known. Spunbonded webs are characterized by a relatively high strength/weight ratio, high porosity, have abrasion resistance properties and are typically non-uniform in such properties as basis weight and coverage.

Spunbonded polyester nonwoven webs can be produced by extruding polyester polymer through a die to form a multiplicity of continuous thermoplastic polyester polymer strands as the polymer exits holes in the die in a generally downward direction onto a moving surface where the extruded strands are collected in a randomly distributed fashion. The randomly distributed strands are subsequently bonded together by to provide sufficient integrity in a resulting nonwoven web of continuous polyester fibers.

In the filter media, an antimicrobial agent will be present in each sheath strand rather than combining strands of core polymer with strands of antimicrobial. The filter media of the present invention is comprised of a majority of the core-sheath fibers with the sheath portion containing an antimicrobial agent as defined in claim 1. The remaining fibers of the filter media can be any other suitable fiber for the media. The filter media is comprised of at least 76% of such core-sheath fibers, preferably at least 90%, and most preferably all the fibers of the filter medium are such core-sheath fibers with the sheath portion containing an antimicrobial agent. The antimicrobial agent prevents a wide array of mold/fungus/bacteria from growing on the finished media. The finished media is intended for use in the pool/spa filter market or other end uses where the product's properties make it fit for use. The amount of antimicrobial contained in the sheath ranges from 0.1 to 7.0 wt%, and preferably from 0.5 to 5.0 wt% based on the weight of the total fiber.

In a preferred embodiment, a polyester polymer chip pre-loaded with antimicrobial will be used. Americhem and Sanitized® are commercially available possible antimicrobial polymer suppliers. The Sanitized® products involve an antimicrobial additive based on a natural active substance in the form of silver-ions encapsulated in a patented ceramic material. Sanitized® MB PET 20-53, for example, imparts a reliable effect against a large number of microbes such as bacteria and fungi. The silver-ions inhibit the intracellular enzyme induction and block the oxygen transfer function of lower forms of life. Thus, microbes are inactivated and can no longer proliferate. The Americhem antimicrobial product performs the same function but is made up of different chemical compounds and provides antimicrobial protection by other chemical/physical means.

In general, the anti-microbial/anti-fungal additives can be inorganic compounds using such metals as copper, zinc, tin, and silver. The best results are obtained using a silver additive dispersed in a polymer such as PET, or polybutylene terephthalate (PBT) carrier, but could be added directly to a melt of a sheath thermoplastic without an intermediate carrier.

The term "pool" as used herein, is intended to include swimming pools of various sizes, wading pools, spas, hot tubs, Jacuzzi, and the like. The term "pools" as used herein includes not only ordinary swimming pools but also whirlpools installed in sports clubs, Kurhaus (spa houses) and healthcare facilities, as well as various kinds of health promoting hot tubs and spas. For example, a spa can be considered a small pool used for bathing or hydrotherapy in which water is heated and circulated. A typical spa has a volume of less than about 1,500 gallons. The spa can include hydrotherapy jet circulation, hot water/cold water mineral baths, air induction bubbles, or combinations thereof. Other common terminology for spas includes hydrotherapy pools, therapeutic pools, whirlpools, hot spas, hydrotherapy spas, or hot tubs.

Generally, the water in the pool is not drained, cleaned or refilled for each individual bather. Thus, it often is desirable to have a reliable water purification system for the pool. The water in a pool can be purified, for example, by adding chlorine to kill microorganisms that thrive in the warm water. The pool water is typically filtered as it is circulated. Typically, the water is "prefiltered" by a coarse filter prior to entry into the purification system (usually sand or diatomaceous earth filters). These coarse filters can be polymeric or metallic screens which trap dirt and debris from the water before it enters the purification system. In the present invention, the purification system comprises the filter medium of the present invention.

More specifically, where the pool is a hot tub or the like, the prefilter is the sole filter and is used to removed debris, insects, oils, bacteria and biofilm from the water.

Generally, most hot tubs and the like do not have a secondary water purification system. Therefore, these filters or cartridges perform the task of filtering the pool water and need to be cleaned on a regular basis. Providing a filter using the filter medium of the present invention would greatly improve the sanitation aspects of such a pool or hot tub.

According to a preferred configuration of the present invention, a bi-component fiber is formed of a sheath component and a core component using polyethylene terephthalate (PET) (or some other thermoplastic polymer) in the core, making up between 20 to 80% of the fiber by weight. The sheath is also PET, or some other suitable thermoplastic polyester polymer, making up between 80 to 20% of the fiber by weight including, as a dispersed solid, an additive which is an anti-microbial compound, to gain the efficiency of the additive on the surface and not wasting the additive in the core.

In the more generalized case as mentioned above, the sheath may be quite thin. However, preferably the sheath is more than 25% of the total fiber cross-section. It has been found that one of the best methods for retaining the anti-microbial qualities in the fiber and in fabrics is to use sheath thicknesses which are properly related to the size of the anti-microbial additive particles. When the particles are larger or smaller, the thickness of the sheath is adjusted accordingly in order to make sure the microbial agent is firmly held in place, and not worked away.

The bi-component anti-microbia/anti-fungal synthetic fiber size would preferably range from 0.5 dTex to 30.0 dTex and could be produced as a cut staple fiber In lengths from 1.0 mm to 180 mm, or in a continuous filament.

Additives which can be incorporated include one or more of UV stabilizers at fire retardant additives; pigments; hydrophilic additives; hydrophobic additives; and/or antistain additives.

The bi-component fiber may be formed by the use of pellets of the two different polyester polymers or a direct polymers stream from the reactor of which the fiber is to be formed. An anti-microbial additive is incorporated into the sheath polymer prior to the final extruding of the fiber in the amounts as defined in claim 1. In the prior art, this was mostly done as a treatment after extruding.

## Claims

1. A water filter medium comprising at least 75% core-sheath fibers, the core-sheath fibers are polyester spunbond fibers with both the core and sheath portions comprising a polyester polymer, the sheath portion containing 0.1 to 7.0 wt% of an antimicrobial agent and wherein the core-sheath fibers contain at least two polyester polymers having a melting point difference between the highest melting polyester polymer and the lowest melting polyester polymer of at least about 5° C the lowest melting polyester polymer forms at least a portion of the of the sheath of the fiber such that the lowest melting polyester polymer can be melted or rendered tacky without melting the higher melting polyester polymers of the fibers and thereby bonding the fibers to each other via the softened/melted sheath component(s) with the proviso that the lowest melting polyester polymer is not polylactic acid.

2. The water filter medium of claim 1, wherein greater than 90 % of fibers comprising the filter medium are the core sheath fibers.

3. The water filter medium of claim 1 or 2, wherein all of the fibers comprising the filter medium are the core sheath fibers.

4. The water filter medium of any of claims 1-3, wherein the antimicrobial agent is a silver based agent.

5. The water filter medium of any of claims 1-4, wherein the core-sheath fibers are polyester spunbond fibers with both the core and sheath portions comprising a polyethylene terephthalte.

6. A pool filter system comprising the water filter medium of any of claims 1-5.

7. A hot tub filter system comprising the water filter medium of any of claims 1-5.

8. A method for filtering water, which comprises passing the water through the water filter medium of any of claims 1-5.

9. The method of claim 8, wherein the water being filtered is pool water or hot tub water.

## Patentansprüche

1. Wasserfiltermedium, das wenigstens 75 % Kern-Mantel-Fasern umfasst, wobei die Kern-Mantel-Fasern Polyesterspinnvliesfasern sind, wobei sowohl die Kern- als auch die Mantelteile ein Polyesterpolymer umfasst, wobei der Mantelteil 0,1 bis 7,0 Gew.-% eines antimikrobiellen Mittels enthält und wobei die Kern-Mantel-Fasern wenigstens zwei Polyesterpolymere beinhalten, die eine Differenz der Schmelzpunkte zwischen dem am höchsten schmelzenden Polyesterpolymer und dem am niedrigsten schmelzenden Polyesterpolymer von wenigstens etwa 5 °C aufweisen, wobei das am niedrigsten schmelzende Polyesterpolymer wenigstens einen Teil des Mantels der Faser bildet, sodass das am niedrigsten schmelzende Polyesterpolymer geschmolzen oder klebrig gemacht werden kann, ohne die höher schmelzenden Polyesterpolymere der Fasern zu schmelzen, und um dadurch die Fasern über die erweichte(n)/geschmolzene(n) Mantelkomponente(n) miteinander zu verbinden mit der Maßgabe, dass das am niedrigsten schmelzende Polyesterpolymer nicht Polymilchsäure ist.

2. Wasserfiltermedium nach Anspruch 1, bei dem mehr als 90 % der Fasern, die das Filtermedium umfassen, die Kern-Mantel-Fasern sind.

3. Wasserfiltermedium nach Anspruch 1 oder 2, bei dem alle Fasern, die das Filtermedium umfassen, die Kern-Mantel-Fasern sind.

4. Wasserfiltermedium nach einem der Ansprüche 1-3, bei dem das antimikrobielle Mittel ein Mittel auf Silberbasis ist.

5. Wasserfiltermedium nach einem der Ansprüche 1-4, bei dem die Kern-Mantel-Fasern Polyesterspinnvliesfasern sind, wobei sowohl die Kern- als auch die Mantelteile ein Polyethylenterephthalat umfassen.

6. Pool-Filtersystem, das das Wasserfiltermedium nach einem der Ansprüche 1-5 umfasst.

7. Warmwasserbecken-Filtersystem, das das Wasserfiltermedium nach einem der Ansprüche 1-5 umfasst.

8. Verfahren zum Filtern von Wasser, das das Durchleiten des Wassers durch das Wasserfiltermedium nach einem der Ansprüche 1-5 umfasst.

9. Verfahren nach Anspruch 8, bei dem das Wasser, das gefiltert wird, Poolwasser oder Warmwasserbeckenwasser ist.

## Revendications

1. Matière filtrante pour filtrer l'eau comprenant au moins 75% fibres noyau-enveloppe, les fibres noyau-enveloppe sont les fibres de polyester filé avec les deux portions de noyau et d'enveloppe comprenant un polymère de polyester, la portion d'enveloppe contenant 0,1 à 7,0% en poids d'un agent antibactérien et où les fibres noyau-enveloppe contiennent au moins deux polymères de polyester ayant une différence des points de fusion entre le polymère de polyester avec le point de fusion le plus haut et le polymère de polyester avec le point de fusion le plus bas d'au moins environ 5 °C le polymère de polyester avec le point de fusion le plus bas forme au moins une portion de l'enveloppe de la fibre de sorte que le polymère de polyester avec le point de fusion le plus bas puisse être fondu ou devenu collant sans fondre les polymères de polyester avec le point de fusion le plus haut des fibres et de cette manière en liant les fibres l'une à l'autre par le(s) composant(s) d'enveloppe ramollie(s)/fondue(s) avec la condition que le polymére de polyester de fuion la plus basse est non acide polylactique.

2. Matière filtrante pour filtrer l'eau selon la revendication 1, où plus de 90% de fibres comprenant la matière filtrante sont des fibres noyau-enveloppe.

3. Matière filtrante pour filtrer l'eau selon la revendication 1 ou 2, où toutes d'entre les fibres comprenant la matière filtrante sont des fibres noyau-enveloppe.

4. Matière filtrante pour filtrer l'eau selon l'une quelconque des revendications 1-3, où l'agent antibactérien est un agent à base d'argent.

5. Matière filtrante pour filtrer l'eau selon l'une quelconque des revendications 1-4, où les fibres noyau-enveloppe sont les fibres de polyester filé avec les deux portions de noyau et d'enveloppe comprenant un polyéthylène téréphtalate.

6. Système pour filtrer l'eau de la piscine comprenant la matière filtrante pour filtrer l'eau selon l'une quelconque des revendications 1-5.

7. Système pour filtrer l'eau de cuve thermale comprenant la matière filtrante pour filtrer l'eau selon l'une quelconque des revendications 1-5.

8. Procédé pour filtrer l'eau, qui comprend le passage de l'eau par la matière filtrante pour filtrer l'eau selon l'une quelconque des revendications 1-5.

9. Procédé selon la revendication 8, où l'eau étant filtrée est l'eau de piscine ou l'eau de cuve thermale.
